Europäisches Patentamt

(19) European Patent Office

Office européen des brevets

(11) **EP 0 715 154 B1**

(12) **EUROPEAN PATENT SPECIFICATION**

(45) Date of publication and mention
of the grant of the patent:
**13.02.2002 Bulletin 2002/07**

(51) Int Cl.⁷: $G01D\ 5/353$, G01M 11/08,
G01B 11/16, G01L 1/24

(21) Application number: **95308582.6**

(22) Date of filing: **29.11.1995**

(54) **Strain monitoring sensor**

Dehnungsmessfühler

Capteur de contrainte

(84) Designated Contracting States:
**AT BE CH DE DK FR GB IE IT LI LU NL SE**

(30) Priority: **30.11.1994  GB 9424138**

(43) Date of publication of application:
**05.06.1996   Bulletin 1996/23**

(73) Proprietor: **CAPE DURASTEEL LIMITED**
**Wellingborough, Northamptonshire NN8 4HB**
**(GB)**

(72) Inventors:
• **Fernando, Gerard Franklyn**
**Iver, Buckinghamshire SL0 0XH (GB)**

• **Badcock, Rodney Allen**
**Uxbridge, Middlesex, UB8 3RB (GB)**

(74) Representative: **Silverman, Warren et al**
**Haseltine Lake & Co. Imperial House, 15-19**
**Kingsway**
**London WC2B 6UD (GB)**

(56) References cited:
**EP-A- 0 210 372      GB-A- 2 184 539**
**US-A- 4 287 427       US-A- 5 224 182**

**Description**

This invention relates to strain monitoring sensors and more particularly to optical fibre sensors (OFS) for strain monitoring applications.

Advanced fibre reinforced composites (AFRC) have been utilised to an increasing extent in industry in recent years owing to the superior specific properties of such composites when compared to conventional materials. Owing to the nature of the AFRC materials, measurement of the internal state thereof is required. Conventional methods for this purpose include the use of strain-gauges, valuation of acoustic emission, ultrasound scanning and radiographic techniques. These are not, however, suitable for in situ monitoring of a structure formed of such composites.

In attempts to overcome this problem, considerable research effort has been directed towards monitoring internal changes in an AFRC using embedded sensors such as shape memory metals, piezo-electric transducers and optical fibre sensors. An advantage of using embedded sensors is that they enable mechanical properties of engineering materials to be detected while causing minimal interference with the bulk material properties.

A number of researchers have reported the successful use of a variety of optical fibre sensors as in for example the embedded Fabry-Perot fibre sensor, fibre Mach-Zender, Bragg gratings, microbend sensors and polarisation measurement techniques. However all such sensors have drawbacks among which may be mentioned:

(i) Interferometric sensors rely on fringe counting from a known strain state on the sensor. If the movement of fringes is too rapid, then the instrumentation loses the reference and the latter is lost. The cost of instrumentation required is high;

(ii) Bragg gratings rely on the measurement of the spectral change in a signal from a grating etched into the fibre. The production of these sensors is an expensive process and the necessary instrumentation is expensive:

(iii) Polarisation techniques rely on the use of relatively expensive optical fibres and couplers although the measurement instrumentation is relatively inexpensive.

Moreover a method was sought that could be implemented at or immediately after the manufacturing stage of the fibre to adapt the fibre for such use. It was thought that a fusion splicer would be an ideal means for deforming the structure of the optical fibre. However, in practice, both the core and cladding were to be deformed by this process.

The structure of the optical fibre can be deformed if the fibre is redrawn in one region when it is in a softened state. Hence multiple deformation may be obtained by periodically (along the length of the fibre) redrawing sections of the fibre. Alternatively, such effect might be obtained when manufacturing if a variation in the draw-rate could be imposed.

The principle underlying the operation of these periodically deformed sensors is normally treated in terms of purely geometrical optics. Some prototype sensors have been fabricated using a BICC fusion splicer and tested by surface mounting on composite specimens. Such sensors are however restricted in their capabilities in that they are limited in size to standard communications fibres.

It is an object of the present invention to provide a sensor for strain monitoring applications which can be very easily fabricated and which is essentially not limited in size.

According to the present invention, there is provided a strain monitoring device which comprises an elongate radiation guide whose cross-section in the absence of strain is permanently modified in accordance with a predetermined mathematical relationship over a portion of its length in relationship to its cross-section on either side of said portion, which portion is emplaced or is for emplacement on or within a material which is to be subject to strain so as to cause lateral compression at said portion, a source of energy transmittable down the radiation guide, radiation output measuring means associated with said portion and means for converting a measurement obtained by such measuring means to a strain measurement in accordance with a predeterminable correlation relationship between radiation output and such strain as said cross section changes under strain.

This invention provides, in a second aspect, a method of monitoring strain in a material which comprises emplacing on or within a material which is to be subject to strain a portion of an elongate radiation guide at which the cross-section of the radiation guide is, in the absence of strain, permanently modified in accordance with a predetermined mathematical relationship to the cross section of the elongate radiation guide over the remainder of its length, transmitting energy along the radiation guide, measuring the output of the guide downstream of said portion and utilising the output value to determine the strain to which the material has been subject in accordance with a predetermined correlation relationship between energy output and strain.

In preferred practice, the sensing region of the radiation guide will have its cross-section reduced. In its simplest form, there will be merely a conical tapering of the radiation guide. The attenuation of the radiation output is then merely a function of the reduced cross-section and the rate of cross-section reduction within the sensing region.

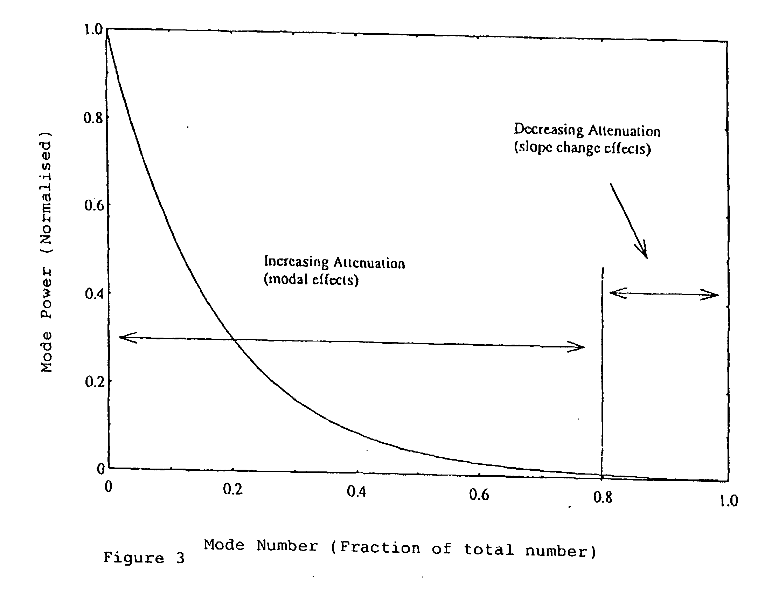

The radiation guide can be designed in its modified portion so that there is decreasing attenuation with applied longitudinal stress if the cross-sectional area is such that the modal volume supported is in a region where the modal power distribution is relatively low (see Figure 3 of the accompanying drawings). When undergoing stress, the modal volume (cross-sectional area) will reduce but the transmitted radiation power will have negligible change. The rate of cross-sectional reduction reduces with increasing stress leading to an increase in the numerical aperture of the radiation guide and a decrease in attenuation.

The sensor can alternatively be designed such that there is an increasing attenuation with applied longitudinal stress (see Figure 3, again). The cross-section in the sensing region should then be such that the modal volume supported is in a region where the modal power distribution is relatively high. Under positive stress, the cross-section reduces, reducing the modal volume supported and leading to a significant reduction in the transmitted radiation power.

In the preferred embodiment of this invention, the radiation guide is comprised by an optical fibre. The sensing element, that is the modified portion of the radiation guide can be manufactured either during the fibre production process or post production. Fabrication of such sensing element when forming part of an optical fibre can thus be carried out during the fibre drawing process by introducing a change in the draw rate of the fibre. Fabrication of the sensing element post production may be carried out by a variety of methods which will reduce the core cross-section at a specified position along the fibre. This may be carried out by softening the fibre and redrawing that section to a different diameter.

An optical fibre sensor embodying this invention allows, in practice, the use of any diameter glass or polymer fibre as optical fibre. The sensitivity of such a sensor may be adjusted by use of a cladding material, whether one is using extruded polymer fibre or drawn glass fibre. It is possible to produce sensors with the same dimensions as those of reinforcing fibres in advanced fibre-reinforced composites so that the optical fibre sensors, when embedded will be totally compatible with mechanical properties of the material of the composite.

The sensitivity of an optical fibre sensor embodying this invention may be adjusted by selection of cladding material mechanical properties such that the relative stiffness of the cladding to the core is decreased whereby a higher strain range may be obtained up to the failure strain of the core material. More particularly, with sensors according to the invention which utilise optical fibres, the sensitivity may abe adjusted by a selection of the cladding material optical properties such that it has a high stress-optic coefficient such that a cladding undergoing strain would further modify the numerical aperture of the fibre, leading to a change in the attenuation.

Greater flexibility in operating in accordance with this invention is achieved when the sensing portion is produced post-fabrication of the radiation guide, Thus where optical fibres are concerned, in an initial step, an optical fibre is stripped of its sheath in the region which it is to carry out sensing. The fibre is then placed in a fusion splicer and are initiated after which the fibre is drawn.

In experiments, the fibre optic strain sensor has been surface mounted on, and also embedded within, a 16 layer cross-ply carbon/epoxy laminate, in particular a 16 ply T300/920 composite, and testing has then been carried out to show the response of the sensors with increasing stress. The response of the sensor has been compared to that obtained from strain gauges and an extensometer. Good agreement was obtained between results from the respective measurement techniques.

More particularly, unlike most interferometric optical fibre sensors which have been developed, the use of intensity sensors embodying this invention enables the monitoring of rapid strain changes without loss of the reference level. In addition to this, unlike the majority of optical fibre sensors proposed for use within the materials industries, sensors embodying the invention utilise relatively simple and inexpensive instrumentation.

In the following, reference will be made to the accompanying drawings wherein:-

Figure 1 is a graph showing the relationship between amplitude of a surface feature of an optical fibre and distance along a fibre length for a sinusoidal surface profile;

Figure 2 indicates a tapered clad core in the region in which stressing thereof takes place during testing;

Figure 3 is a graph showing how attenuation of power output is a function of mode number;

Figure 4 shows the signal response of a sensor employed in the practice of this invention applied to a composite as the composite undergoes loading;

Figure 5 is a graph showing load and unload responses when the composite has been loaded to a higher level;

Figure 6 shows the load and unload response when the composite has been loaded to an even higher value; and

Figure 7 shows the response of the sensor when it has been loaded/unloaded and reloaded to a higher value.

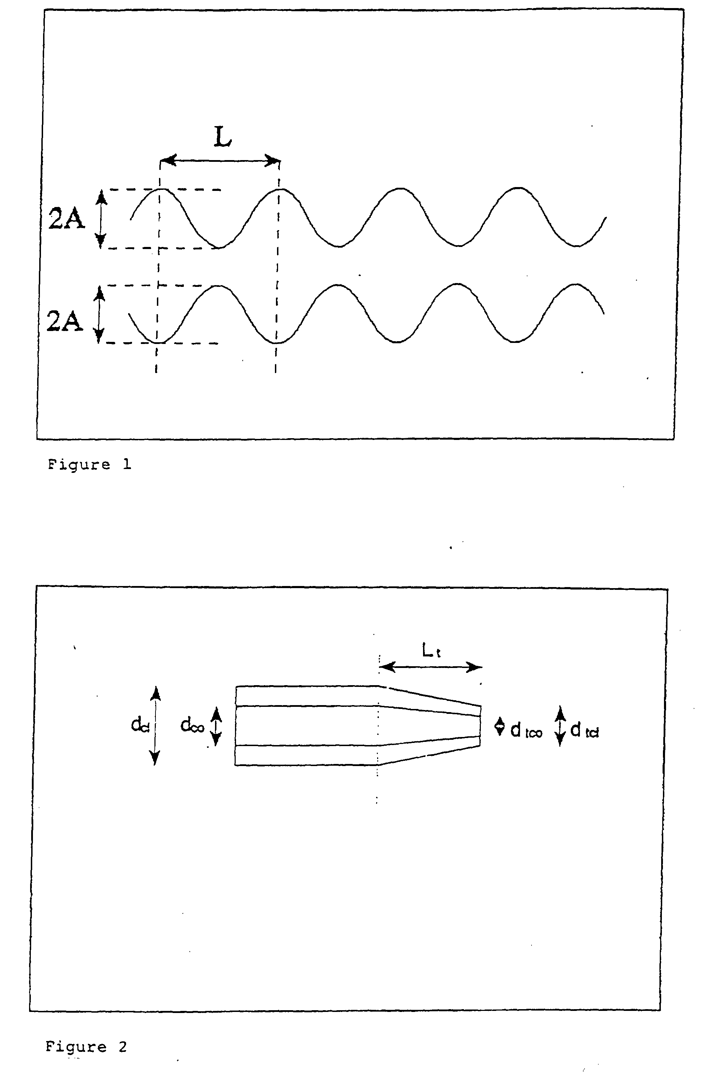

Theory underlying this invention will now be explained in relation to the simplest form of cross-sectional modification herein contemplated, namely sinusoidal wave form (see Figure 1) of a section of an optical fibre and the effect of this on light attenuation when a material in which the fibre is embedded is subject to strain.

The deformation to which the sensor is subject when the material in which it is embedded is subject to strain can be described in geometric terms as

$$y = A.\sin\left(\frac{2.\pi.l}{L}\right) \qquad \text{(see Fig. 1)}$$

wherein

A =     amplitude of surface feature
L =     periodicity of topography
1 =     distance along fibre length
y =     height at particular position

The average slope of the deformation may be expressed as follows:

$$\textit{Average Slope} = \frac{4.A}{L}$$

From this, the average slope angle can be found:

$$\theta = \tan^{-1}\left(4.\frac{A}{L}\right)$$

However, if the sensor is subject to strain, then the average angle will alter whereby

$$\theta = \tan^{-1}\left(\frac{4.A}{L} \cdot \frac{1+\mu\epsilon}{1+\epsilon}\right)$$

where

$\epsilon$ =     strain
$\mu$ =     Poisson ratio

As a result of the change in the average slope, there is effectively a reduction in the critical angle in the region of strain by the indicated amount.

The maximum gradient which will be achieved for the sine wave defined above will represent the maximum value of the derivative of the wave equation which will be as follows:

$$\frac{dy}{dx} = \frac{2.\pi.A.l}{L} \cdot \cos\left(\frac{2.\pi.l}{L}\right)$$

The maximum value of the gradient will occur when 1 = L/2 and thus

$$\text{max } \textit{gradient} = \pi.A.\cos(\pi)$$

$$= -\pi.A.$$

More particularly, for a clad optical fibre with a tapered section, there exist a set of relationships which confirm how the relationship between power output and load exists generally. Thus, referring to Figure 2 of the drawings, the symbols shown thereon represent the following:-

$d_{co}$ =     core diameter
$d_{cl}$ =     cladding diameter
$d_{tco}$ =     core diameter in tapered region
$d_{tcl}$ =     cladding diameter in tapered region
$L_t$ =     length of tapered region
$\theta_t$ =     angle of taper

In indicating the various quantitative features of a tapered optical fibre section, the following assumptions may be made:-

(i) Angular power distribution is even.
(ii) Core is deformed in same proportion as cladding (in tapered region).
(iii) Step index fibre
(iv) Taper slope is a constant angle.

Of the aforementioned parameters, $d_{co}$ and $d_{cl}$ will be known, as will the numerical aperture, NA, and the refractive index $n_{co}$ of the fibre, $d_{tcl}$ and $L_t$ are measurable and $d_{tco}$ and $\theta_t$ can be determined as follows:-

$$d_{tco} = \frac{d_{co}}{d_{cl}} \cdot d_{tcl} \tag{1}$$

assuming the core is drawn in the same ratio as the cladding, and

$$\theta_c = \tan^{-1}\left(\frac{d_{tco} - d_{co}}{2 \cdot L_t}\right) \tag{2}$$

assuming the angle is constant over the entire taper length

The constant angle of taper, $\theta_t$, increases the effect of angle of a ray incident on the core/cladding interface by $\theta_t$. Therefore, for the taper region, the critical angle for a ray incident at the interface is given by:

$$\theta_{ct} = \theta_c = \theta_t \tag{3}$$

where $\theta_c$ is the critical angle for the optical fibre given by the relationship

$$\theta_c = \sin^{-1}\left(\frac{NA}{n_{co}}\right) \tag{4}$$

If the angular power distribution down a fibre is assumed to be constant, then the attenuation due to the taper may be calculated:

$$Attenuation = \frac{P_{out}}{P_\varepsilon} = \frac{\theta_c}{\theta_{ct}} \tag{5}$$

The present invention takes account of the fact that the angle $\theta_t$ changes with strain. Thus if one assumes that the length of the tapered region at any moment is given by the relationship

$$L_{t\varepsilon} = L_t \cdot (1 + \varepsilon) \tag{6}$$

where $\varepsilon$ = strain and $L_{t\varepsilon}$ is the length of the taper after strain $\varepsilon$ and the diameter of the core at the end of the tapered region is given by the relationship

$$d_{tco\varepsilon} = d_{tco} \cdot (1 - \varepsilon \cdot \eta) \tag{7}$$

where $\eta$ = Poisson ratio for the material, then the taper angle change obeys the relationship

$$\theta_{t\varepsilon} = \tan^{-1}\left(\frac{d_{tco} \cdot (1 - \varepsilon \cdot \eta)}{2 \cdot L_t \cdot (1 + \varepsilon)}\right) \tag{8}$$

Once $\theta_{te}$ has been calculated, then the relationship between power and strain in going from an unstrained taper to a strained taper is given by the relationship

$$Attenuation = \frac{\theta_{te}}{\theta_t} = \frac{\tan^{-1}\left(\frac{d_{tco}(1 - \varepsilon \cdot \eta)}{2\,L_t(1 + \varepsilon)}\right)}{\tan^{-1}\left(\frac{d_{tco} - d_{co}}{2 \cdot L_t}\right)}$$

Finally it is possible to determine the relationship between power and strain in going from an optical fibre which is not reflecting any strain to a strained taper in accordance with the following relationship

$$Attenuation = \frac{\theta_{te}}{\theta_c} = \frac{\tan^{-1}\left(\frac{d_{tco}(1 - \varepsilon \cdot \eta)}{2 \cdot L_t(1 + \varepsilon)}\right)}{\sin^{-1}\left(\frac{NA}{n_{co}}\right)}$$

The following loading tests were carried out on a composite to show the relationship between change in power output and applied load tests.

Sensors embodying this invention were surface mounted on 16-ply T300/920 composites and tested to show the response of the sensors with increasing stress. Sensors utilized were found to have a gauge factor of between 3 and 10. A conventional strain gauge usually has a gauge factor of 2. Monitoring of the behaviour during loading and unloading gave the results shown in Figures 3 to 6 of the accompanying drawings. The response of the sensor remained repeatable with there being a little hysteresis during loading/unloading of the sensor.

Testing of the aforementioned composite was carried out under the following regimes:-

Test 1

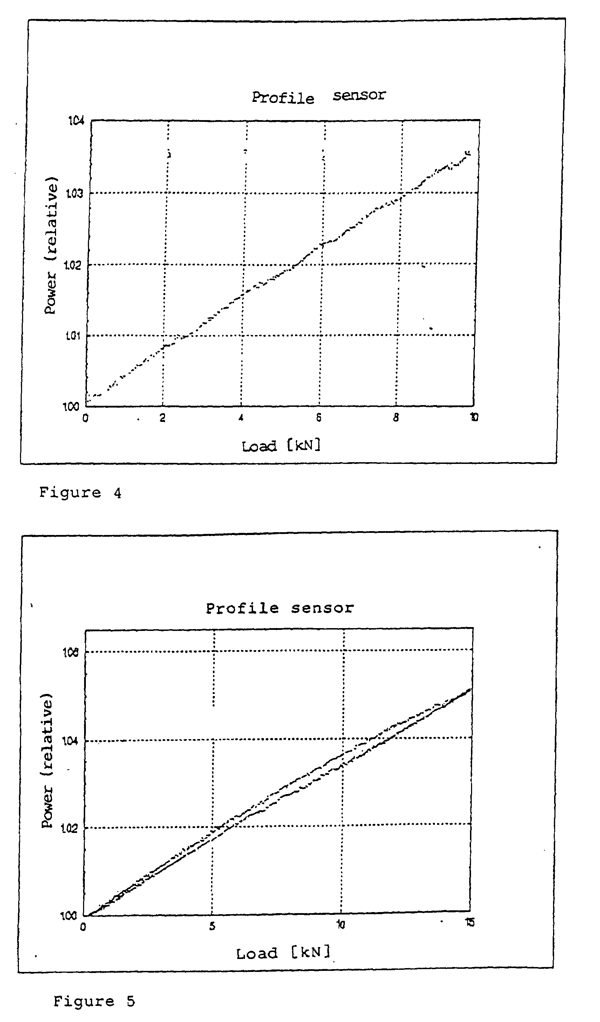

The cross-ply T300/920 composite was subjected to gradual loading to 10 KN and the resultant signal response of the sensor was detected. The straight line nature of the signal response shows its direct relationship to the loading which took place (see Figure 4).

Test 2

The composite subjected gradually to a loading of 10 KN in Test 1 was then unloaded. Figure 5 shows that under such circumstances the response of the sensor agreed fairly closely with the results of Figure 4 but some hysteresis was displayed during unloading.

Test 3

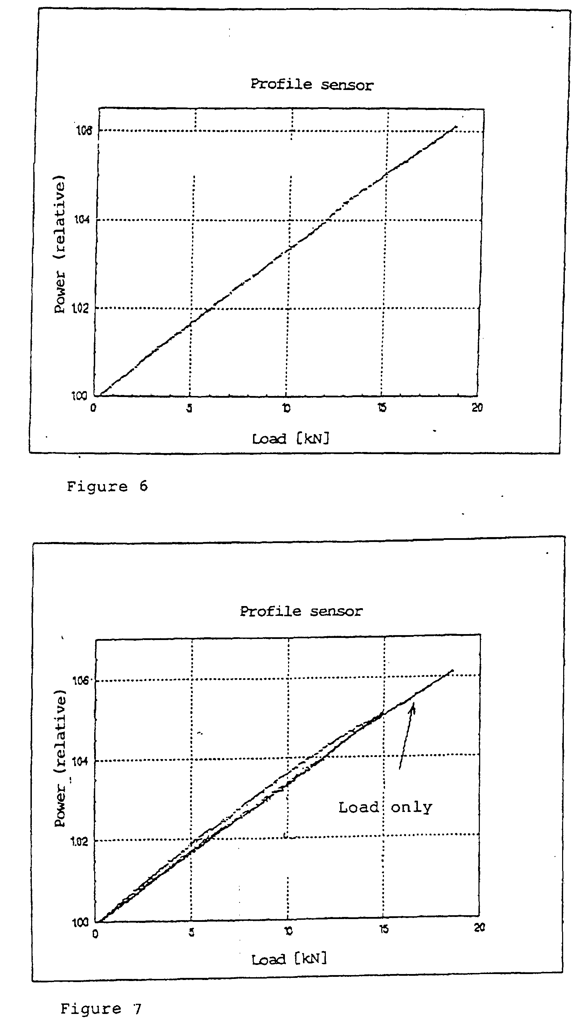

The procedure of Test 2 was repeated with loading taking place to 18 KN. The results obtained are shown in Figure 6.

Test 4

After carrying out the procedure of Test 3, a further loading to 18 KN was imposed on the cross-ply composite. There was no noticeable difference in the loading response of the sensor other than for slight hysteresis (see Figure 7).

**Claims**

1.  A strain monitoring device which comprises an elongate radiation guide whose cross-section in the absence of strain is permanently modified in accordance with a predetermined mathematical relationship over a portion of its length with respect to its cross-section on either side of said portion, which portion is emplaced or is for emplacement on or within a material which is to be subject to a longitudinal strain so as to cause a reduced cross-section at said portion, a source of energy transmittable down the radiation guide, radiation output measuring means associated with said portion and means for converting a measurement obtained by such measuring means to a strain measurement in accordance with a predeterminable correlation relationship between radiation output and such strain as said cross section changes under said strain.

2.  A strain monitoring device according to claim 1 in which the radiation guide has its cross-section reduced at said portion.

3.  A strain monitoring device according to claim 2, wherein the sensing region of the radiation guide is conically tapered.

4.  A strain monitoring device according to claim 1, wherein the radiation guide is designed in its modified portion so that there is decreasing attenuation with applied longitudinal stress.

5.  A strain monitoring device according to claim 1, wherein the radiation guide is designed in its modified portion so that there is increasing attenuation with applied longitudinal stress.

6.  A strain monitoring device according to any preceding claim wherein the elongate radiation guide is an optical fibre.

7.  A strain monitoring device according to claim 6, wherein the elongate radiation guide is an unclad optical fibre.

8.  A method of monitoring strain in a material which comprises emplacing on or within a material, which is to be subject to a longitudinal strain, a portion of an elongate radiation guide of which the cross-section is, in the absence of strain, permanently modified in accordance with a predetermined mathematical relationship with respect to the cross section of the elongate radiation guide over the remainder of its length, transmitting energy along the radiation guide, measuring the output of the guide downstream of said portion and utilising the output value to determine the strain to which the material has been subject in accordance with a predetermined correlation relationship between radiation output and such strain as said cross-section is reduced under said strain.

9.  A method as claimed in claim 10, wherein the said portion of the elongate radiation guide is emplaced in a composite laminate.

10. A method as claimed in claim 9, wherein the elongate radiation guide is an optionally clad optical fibre and the optionally clad fibre has the same cross-sectional area as the fibres of said laminate in which the elongate radiation guide is emplaced.

**Patentansprüche**

1. Belastungskontrollvorrichtung, umfassend

   eine längliche Strahlenführung, deren Querschnitt bei Abwesenheit einer Belastung über einen Längsabschnitt gemäß einer vorermittelten mathematischen Beziehung laufend hinsichtlich ihres Querschnitts an einer der Abschnittsseiten modifiziert wird, wobei dieser Abschnitt in Stellung gebracht ist oder sich in Stellung befindet auf oder innerhalb eines Materials, das einer Längsverformung unterworfen sein wird, was in diesem Abschnitt einen kleineren Querschnitt hervorruft,
   eine Energiequelle, die in der Strahlenführung weitergeleitet wird,
   Strahlen-Ausgangsmesseinrichtungen, die dem Abschnitt zugeordnet sind, sowie
   Einrichtungen zum Umwandeln einer von einer solchen Messvorrichtung gewonnenen Messung in eine Belastungsmessung und zwar gemäß einer vorermittelten Korrelationsgleichung zwischen dem Strahlenausgang und der Belastung, wenn der Querschnitt sich unter der Belastung ändert.

2. Belastungskontrollvorrichtung gemäß Anspruch 1, wobei die Strahlenführung einen verminderten Querschnitt in dem Abschnitt besitzt.

3. Belastungskontrollvorrichtung nach Anspruch 2, wobei der Sensorbereich der Strahlenführung konisch zulaufend ist.

4. Belastungskontrollvorrichtung nach Anspruch 1, wobei die Strahlenführung in ihrem modifizierten Abschnitt so ausgelegt ist, dass bei einer Längabelastung die Dämpfung geringer wird.

5. Belastungskontrollvorrichtung nach Anspruch 1, wobei die Strahlenführung in ihrem modifizierten Abschnitt so ausgelegt ist, dass bei einer Längsbelastung die Dämpfung zunimmt.

6. Belastungskontrollvorrichtung nach irgendeinem vorhergehenden Anspruch, wobei die längliche Strahlenführung eine optische Faser ist.

7. Belastungskontrollvorrichtung nach Anspruch 6, wobei die längliche Strahlenführung eine nicht-umwandelte optische Faser ist.

8. Verfahren zur Überwachung der Belastung in einem Material, umfassend das Einrichten auf oder innerhalb eines Materials, das einer Längsbelastung unterworfen sein wird, eines Abschnitts einer länglichen Strahlenführung, deren Querschnitt bei Abwesenheit einer Belastung über ihre verbleibende Länge gemäß einer vorermittelten mathematischen Beziehung laufend hinsichtlich des Querschnitts der länglichen Strahlenführung modifiziert wird,

   Weiterleiten von Energie längs der Strahlenführung,
   Messen des Ausgang an der Führung stromabwärts des Abschnitts und
   Verwenden des Ausgangswerts zur Bestimmung der Belastung, dem das Material ausgesetzt ist, gemäß einer vorermittelten Korrelationsgleichung zwischen dem Strahlanausgang und eienr solchen Belastung, wobei der Querschnitt unter der Belastung kleiner wird.

9. Verfahren nach Anspruch 10, wobei der Abschnitt der länglichen Strahlenführung in einem Kompositlaminat eingebracht ist.

10. Verfahren nach Anspruch 9, wobei die längliche Strahlenführung wahlfrei eine ummantelte optische Faser ist und die wahlfrei ummantelte Faser die gleiche Querschnittsfläche besitzt wie die Fasern des Laminats, in der die längliche Strahlenführung eingerichtet ist.


**Revendications**

1. Dispositif de surveillance de contrainte qui comprend un guide de rayonnement allongé dont la section transversale en l'absence de contrainte est modifiée de façon permanentc selon une relation mathématique déterminée à l'avance sur une partie de sa longueur par rapport à sa section transversale de chaque côté de ladite partie, laquelle partie est mise en place ou est destinée à être mise en place sur ou à l'intérieur d'un matériau qui doit être soumis à une contrainte longitudinale afin de créer une section transversale réduite au niveau de ladite partie, une source d'énergie pouvant être transmise dans le guide de rayonnement, un moyen de mesure de puissance de rayonnement associé à ladite partie et un moyen pour convertir une mesure obtenue par ce moyen de mesure en une mesure de contrainte selon une relation de corrélation qui peut être déterminée à l'avance entre la puissance de rayonnement et cette contrainte tandis que ladite section transversale change sous ladite contrainte.

2. Dispositif de surveillance de contrainte selon la revendication 1 dans lequel la section transversale du guide de rayonnement est réduite au niveau de ladite partie.

3. Dispositif de surveillance de contrainte selon la revendication 2, dans lequel la région de détection du guide de rayonnement est rétrécie de manière conique.

4. Dispositif de surveillance de contrainte selon la revendication 1 dans lequel la partie modifiée du guide de rayonnement est conçue de façon à obtenir une atténuation qui diminue avec la contrainte longitudinale appliquée.

5. Dispositif de surveillance de contrainte selon la revendication 1 dans lequel la partie modifiée du guide de rayonnement est conçue de façon à obtenir une atténuation qui augmente avec la contrainte longitudinale appliquée.

6. Dispositif de surveillance de contrainte selon l'une quelconque des revendications précédentes dans lequel le guide de rayonnement allongé est une fibre optique.

7. Dispositif de surveillance de contrainte selon la revendication 6 dans lequel le guide de rayonnement allongé est une fibre optique nue.

8. Procédé de surveillance de contrainte dans un matériau qui comprend les opérations consistant à mettre en place sur ou à l'intérieur d'un matériau, qui doit être soumis à une contrainte longitudinale, une partie d'un guide de rayonnement allongé dont la section transversale est, en l'absence de contrainte, modifiée de façon permanente selon une relation mathématique déterminée à l'avance par rapport à la section transversale du guide de rayonnement allongé sur le reste de sa longueur, à transmettre de l'énergie dans le guide de rayonnement, à mesurer la puissance du guide en aval de ladite partie et à utiliser la valeur de puissance pour déterminer la contrainte à laquelle le matériau a été soumis selon une relation de corrélation déterminée à l'avance entre la puissance de rayonnement et cette contrainte tandis que ladite section transversale se réduit sous ladite contrainte.

9. Procédé selon la revendication 10, dans lequel ladite partie du guide de rayonnement allongé est mise en place dans un stratifié composite.

10. Procédé selon la revendication 9, dans lequel le guide de rayonnement allongé est une fibre optique éventuellement revêtue et la fibre optique éventuellement revêtue a la même superficie de section que les fibres dudit stratifié dans lequel est mis en place le guide de rayonnement allongé.

Figure 1

Figure 2

Figure 3

Figure 4

Figure 5

Figure 6

Figure 7